(19) Europäisches Patentamt

European Patent Office

Office européen des brevets

(11) Veröffentlichungsnummer: **0 203 293 B1**

(12) **EUROPÄISCHE PATENTSCHRIFT**

(45) Veröffentlichungstag der Patentschrift: **13.05.92**

(21) Anmeldenummer: **86103813.1**

(22) Anmeldetag: **20.03.86**

(51) Int. Cl.⁵: **G05D 23/20**, A61H 33/06

(54) **Elektroofensteuerung für eine Sauna.**

(30) Priorität: **29.03.85 DE 3511435**

(43) Veröffentlichungstag der Anmeldung:
**03.12.86 Patentblatt 86/49**

(45) Bekanntmachung des Hinweises auf die
Patenterteilung:
**13.05.92 Patentblatt 92/20**

(84) Benannte Vertragsstaaten:
**AT CH DE GB LI NL SE**

(56) Entgegenhaltungen:
DE-A- 3 035 680    DE-A- 3 108 193
FR-A- 2 311 352    FR-A- 2 418 582
US-A- 4 404 462    US-A- 4 429 829

(73) Patentinhaber: **Wella Aktiengesellschaft**
**Berliner Allee 65**
**W-6100 Darmstadt(DE)**

(72) Erfinder: **Mattinger, Detlef**
**Athanasius-Kircher-Strasse 6**
**W-6418 Hünfeld(DE)**
Erfinder: **Rutsch, Helmut**
**Königstrasse 15**
**W-6400 Fulda(DE)**
Erfinder: **Trott, Adolf**
**Schulstrasse 27**
**W-6419 Nüsttal 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Aufheizen eines Saunaraums nach dem Oberbegriff des Anspruchs 1.

Ein derartiges Verfahren ist aus der US-A-4 429 829 bekannt. Hierbei wird zwecks Aufheizens eines geschlossenen Raums - am Beispiel eines Brutofens - auf eine Solltemperatur an einem wärmequellenfernen Ort mit möglichst gutem Regelverlauf in die Nähe der Solltemperatur vorgeschlagen, der Regelung der Solltemperatur, gemessen durch einen ortnahen ersten Temperatursensor, die Regelung für die warmequellennahe Temperatur, gemessen durch einen zweiten Temperatursensor, einer Kaskaden-Regelung zu unterlagern. Als Wärmequelle wird warmer Luftstrom eingesetzt, der beim Erreichen der Solltemperatur unterbrochen wird. Dieses Verfahren ist nicht zum Aufheizen eines Saunaraums geeignet, da der einzusetzende Elektroofen neben der Warmluftströmung auch Wärmestrahlungsenergie abgibt, die ein erhebliches Überschreiten der Solltemperatur zur Folge hätte (Überheizen).

Es ist daher Aufgabe der Erfindung, ein gattungsgleiches Verfahren zum Aufheizen eines Saunaraums zu schaffen, das ein schnelles Aufheizen auf eine Solltemperatur ermöglicht, ohne daß ein Überheizen (Überschreiten der Solltemperatur) möglich ist.

Diese Aufgabe wird gelöst nach dem kennzeichnenden Teil des Anspruchs 1. Vorteilhafte Weiterbildungen der Erfindung gehen aus den Unteransprüchen hervor.

Dadurch, daß der Ofen solange zu einer maximal zulässigen Temperatur gesteuert wird, bis die Isttemperatur in unmittelbarer Nähe des ersten Temperatursensors eine untere Schwelle eines Proportionalbandes um die Solltemperatur überschritten hat, wird einerseits ein Schnellaufheizeffekt und andererseits ein Überhitzungsschutz des Saunaraums erreicht.

In einer Ausbildung des Verfahrens wird eine kostengünstige Zweipunkt-Kaskaden-Regelung vorgeschlagen.

Ein glatterer Verlauf der Isttemperatur wird durch eine PI-Kaskaden-Regelung erreicht.

Es ist für den Benutzer der Sauna vorteilhaft, daß er die momentane Isttemperatur angezeigt bekommt, da er dann das Fortschreiten der Aufheizphase erkennen kann.

Durch das Anzeigen des Erreichens eines vorgegebenen Differenzwerts von Soll- und Isttemperatur ist der Benutzer nicht mehr auf eine Abschätzung angewiesen, sondern zeigt ihm das bevorstehende Erreichen der Solltemperatur an.

Noch komfortabler ist es für den Benutzer, wenn er das Erreichen der Solltemperatur direkt angezeigt bekommt, da er dann sofort den Saunaraum mit der gewünschten Raumtemperatur benutzen kann.

In einer weiteren Ausbildung der Erfindung ist vorgesehen, bei einem etwaigen Ausfall der Isttemperaturmessung am ofenfernen Ort vom ofennahen Temperatursensor die alleinige Regelgröße zu bilden und den Ausfall anzuzeigen, zum Beispiel am Zentralgerät die Istwerttemperaturanzeige periodisch unterbrechen.

Im folgenden wird die Erfindung anhand eines Ausführungsbeispieles beschrieben.

Es zeigen:
Fig. 1 eine Temperatur-Zeit-Kurve;
Fig. 2 einen Querschnitt durch einen Saunaraum;
Fig. 3 ein Blockschaltbild.

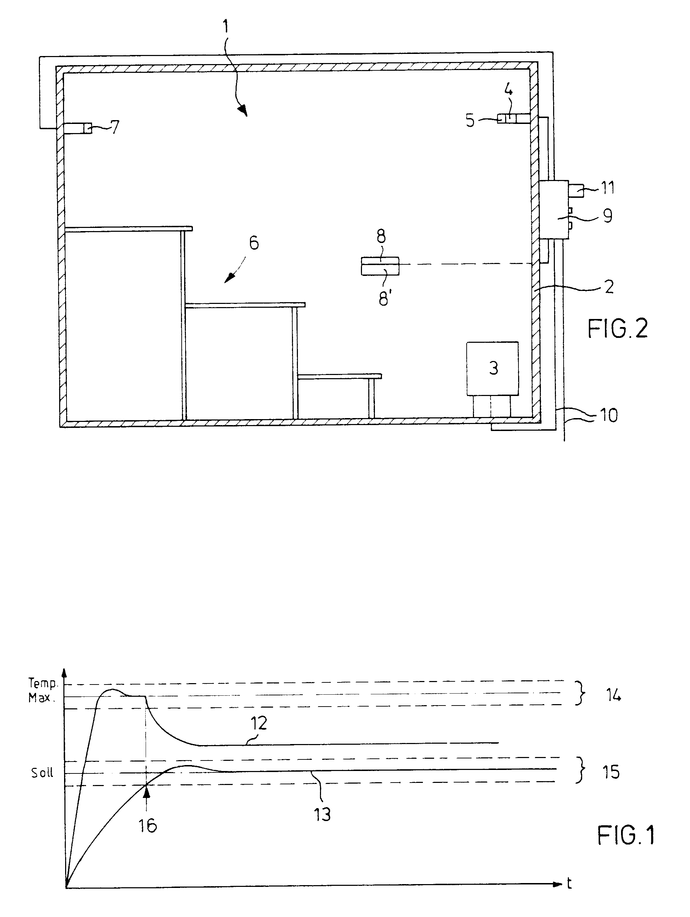

In der Figur 1 ist der Kurvenverlauf 12, 13 des erfindungsgemäßen Verfahrens dargestellt, wobei die glatten Kurvenverläufe 12, 13 durch eine an sich bekannte PI-Kaskadenregelung erreicht werden. Der P-Anteil wird von dem Temperatursensor 5 (Kurve 12), der I-Anteil von dem Temperatursensor 7 (Kurve 13) abgeleitet. Die Temperaturregelungshysterie für den Temperatursensor 5 ist als sogenanntes Proportionalband 14, für den Sensor 7 als Proportionalband 15 dargestellt.

Beim Aufheizvorgang wird solange mit maximaler Temperatur (140 Grad Celsius) - gemessen durch den ofennahen Temperatursensor 5 - über den PI-Regler der Ofen 3 gesteuert, bis die Temperatur am banknahen Temperatursensor 7 die untere Schwelle des Proportionalbandes 15 überschritten hat (Ofenabschaltpunkt 16), worauf die weitere Regelung der Isttemperatur, gemessen durch den banknahen Temperatursensor 7, vorgenommen wird. Durch die PI-Regelungscharakteristik tritt kein periodisches Pendeln des Temperaturistwertes um den Sollwert auf, wodurch der Istwert deckungsgleich mit dem Sollwert ausgeregelt wird und damit wird eine gradgenaue Sollwerttemperatur am Benutzungsort (Temperatursensor 7) erzielt.

Die Überlagerung der Kurve 12 auf der Kurve 13 ergibt sich durch das Temperaturgefälle zwischen Ofen 3 und dem Bereich der Sitzbänke 6.

Eine Zweipunktkaskadenregelung (nicht dargestellt) würde einen nicht so optimalen Kurvenverlauf 13 (periodisches Pendel um einen Temperatursollwert) ergeben im Gegensatz zu der PI-Kaskadenregelung.

In der Fig. 2 ist ein Saunaraum 1 dargestellt. In bekannter Weise steht an einer Wand 2 ein Elektroofen 3, über den in einer Höhe von ca. 10 - 15 cm unterhalb der Decke gemeinsam eine Temperaturschmelzsicherung 4 und ein ofennaher Temperatursensor 5 angeordnet sind. Aus Temperaturgründen ist die Installation meist außerhalb des Saunaraumes 1 angeordnet. In Sitzhöhe der hinteren Sitzbank 6 ist ein zweiter Temperatursensor 7 angeordnet und hat die Aufgabe, an diesem Ort die vorgegebene Sollwerttemperatur zu messen. Es ist nützlich, wenn die Istwerttemperatur mittels einer Anzeige 8 im Saunaraum 1 abzulesen ist.

Das außerhalb des Saunaraumes 1 befindliche Zentralgerät 9 ist mit einer Stromversorgung 10, den beiden Temperatursensoren 5, 7, der Temperaturschmelzsicherung 4, dem Ofen 3 und der Istwerttemperaturanzeige 8 verbunden. Darüberhinaus weist das Zentralgerät 9 eine Bereitschaftsanzeige 11 auf, die signalisiert, daß die vorgewählte Solltemperatur mit der Isttemperatur übereinstimmt, beziehungsweise in ungefährer Übereinstimmung dazu. Diese Anzeige 11 läßt sich natürlich auch vorteilhaft an einem anderen Ort (zusätzlich) anbringen, zum Beispiel in einem Wohnbereich, womit man auf das Erreichen der gewünschten Saunatemperatur hingewiesen wird. Neben der Istwerttemperaturanzeige 8 im Saunaraum 1 kann natürlich auch eine entsprechende zusätzliche Sollwerttemperaturanzeige 8' vorgesehen werden.

Das Zentralgerät 9 befindet sich außerhalb des Saunaraumes 1, weil hier solche Temperaturen herrschen, die normale Bauteile erlauben und somit in einem kostengünstigen Rahmen bleibt.

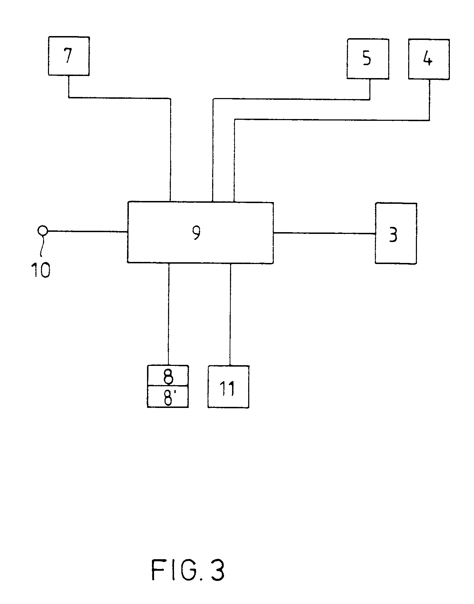

In der Fig. 3 ist in schematischer Darstellung die Elektroofenregelung mittels eines Blockschaltbildes dargestellt. So sind einerseits mit dem Zentralgerät 9 die beiden Temperatursensoren 5, 7 und die Temperaturschmelzsicherung 4 verbunden, andererseits sind der Ofen 3, die Istwerttemperaturanzeige 8, die Bereitschaftsanzeige 11 und die Stromversorgung 10 mit dem Zentralgerät 9 verbunden. Das Zentralgerät 9 steuert und regelt mit einem Mikroprozessor den Ofen 3.

Regelungstechnisch werden im Zentralgerät 9 die beiden Temperaturwerte - gemessen durch die Sensoren 5, 7 - in einer Kaskadenregelungsschaltung erfaßt, die durch einen Mikroprozessor kontrolliert werden.

## Patentansprüche

1. Verfahren zum Aufheizen eines Saunaraums (1) auf eine Solltemperatur im Bereich einer Bank (6), wobei der Regelung der Solltemperatur, gemessen durch einen banknahen ersten Temperatursensor (7), die Regelung für die elektroofennahe Temperatur, gemessen durch einen zweiten Temperatursensor (5), einer Kaskaden-Regelung unterlagert wird, **dadurch gekennzeichnet,** daß der Ofen (3) solange zu einer maximal zulässigen Temperatur in unmittelbarer Nähe des zweiten Temperatursensors (5) gesteuert wird, bis die Isttemperatur in unmittelbarer Nähe des ersten Temperatursensors (7) eine untere Schwelle eines Proportionalbandes (15) um die Solltemperatur überschritten hat.

2. Verfahren nach Anspruch 1, **dadurch gekennzeichnet,** daß dem Proportionalreglerband (15) eine Zweipunkt-Kaskaden-Regelung zugeordnet ist.

3. Verfahren nach Anspruch 1, **dadurch gekennzeichnet,** daß dem Proportionalreglerband (15) eine PI-Kaskaden-Regelung zugeordnet ist, wobei der P-Anteil von dem zweiten Temperatursensor (5) und der I-Anteil von dem ersten Temperatursensor (7) abgeleitet wird.

4. Verfahren nach mindestens einem der vorangegangenen Ansprüche, **dadurch gekennzeichnet,** daß der vom ersten Temperatursensor (7) gemessene Isttemperaturwert angezeigt wird.

5. Verfahren nach mindestens einem der vorangegangenen Ansprüche, **dadurch gekennzeichnet,** daß das Erreichen eines vorgegebenen Differenzwerts von Soll- und Isttemperatur angezeigt wird.

6. Verfahren nach mindestens einem der vorangegangenen Ansprüche, **dadurch gekennzeichnet,** daß das Erreichen der Solltemperatur angezeigt wird.

7. Verfahren nach mindestens einem der vorangegangenen Ansprüche, **dadurch gekennzeichnet,** daß bei Ausfall des ersten Temperatursensors (7) vom zweiten Temperatursensor (5) die alleinige Regelgröße gebildet und angezeigt wird.

## Claims

1. A method of heating a sauna room (1) to a desired temperature in the region of a bench (6), the control of the desired temperature, measured by a first temperature sensor (7) near the bench, being superimposed on the control for the temperature near the electric stove, measured by a second temperature sensor (5), in a cascade control, characterised in that the furnace (3) is controlled at a maximum admissible temperature in the immediate vicinity of the second temperature sensor (5) until the actual temperature in the immediate vicinity of the first temperature sensor (7) has crossed a lower threshold of a proportional band (15) around the desired temperature.

2. A method according to Claim 1, characterised in that a two-position cascade control is assigned to the proportional-controller band (15).

3. A method according to Claim 1, characterised in that a PI cascade control is assigned to the proportional-controller band (15), the P-component being derived from the second temperature sensor (5) and the I-component being derived from the first temperature sensor (7).

4. A method according to at least one of the preceding Claims, characterised in that the actual temperature value measured by the first temperature sensor (7) is indicated.

5. A method according to at least one of the preceding Claims, characterised in that the attainment of a preset differential value of the desired and actual temperature is indicated.

6. A method according to at least one of the preceding Claims, characterised in that the attainment of the desired temperature is indicated.

7. A method according to at least one of the preceding Claims, characterised in that, on failure of the first temperature sensor (7), the single controlled variable is formed and indicated by the second temperature sensor (5).

**Revendications**

1. Procédé de chauffage d'un local de sauna (1), à une température de consigne dans la zone d'un banc (6), dans lequel, à la régulation de la température de consigne, mesurée par un premier capteur de température (7) proche du banc, est subordonnée à la régulation de la température au voisinage du poêle électrique, mesurée par un deuxième capteur de température (5), dans une régulation en cascade, caractérisé en ce que le poêle (3) est commandé pour atteindre une température admissible maximale à proximité immédiate du deuxième capteur de température (5), jusqu'à ce que la température réelle à proximité immédiate du premier capteur (7) dépasse un seuil inférieur d'une bande proportionnelle (15) entourant la température de consigne.

2. Procédé selon la revendication 1, caractérisé en ce qu'une régulation en cascade à deux points est associée à la bande de régulateur proportionnel (15).

3. Procédé selon la revendication 1, caractérisé en ce qu'une régulation en cascade de type PI est associée à la bande de régulateur proportionnel (15), où la partie P est tirée du deuxième capteur de température (5) et la partie I est tirée du premier capteur de température (7).

4. Procédé selon au moins l'une des revendications précédentes, caractérisé en ce que la valeur de température réelle mesurée par le premier capteur de température (7) est affichée.

5. Procédé selon au moins l'une des revendications précédentes, caractérisé en ce que l'obtention d'une valeur de différence prédéterminée entre température de consigne et température réelle est affichée.

6. Procédé selon au moins l'une des revendications précédentes, caractérisé en ce que l'obtention de la température de consigne est affichée.

7. Procédé selon au moins l'une des revendications précédentes, caractérisé en ce qu'en cas de panne du premier capteur de température (7), la seule grandeur de réglage est formée et affichée par le deuxième capteur de température (5).

1

4

5

7

11

9

8

6

8'

2

FIG.2

3

10

Temp.
Max.

14

12

Soll

15

13

16

FIG.1

t

5

FIG. 3